# EUROPÄISCHE PATENTSCHRIFT

(11) **EP 2 547 539 B1**
(45) Veröffentlichungstag und Bekanntmachung des Hinweises auf die Patenterteilung: **12.04.2017**
(21) Anmeldenummer: 11706173.9
(22) Anmeldetag: 19.02.2011
(51) Int. Cl.: B60G 3/20, B60G 7/00

(54) **RADTRÄGER FÜR EINE MEHRLENKER-EINZELRADAUFHÄNGUNG**
WHEEL SUPPORT FOR AN INDEPENDENT MULTILINK SUSPENSION SYSTEM
SUPPORTS DE ROUE POUR SUSPENSION INDEPENDANT AYANT PLUSIEURS BRAS OSCILLANTS

(30) Priorität: 16.03.2010 DE 102010011487
(43) Veröffentlichungstag der Anmeldung: 23.01.2013
(73) Patentinhaber: Volkswagen Aktiengesellschaft, 38440 Wolfsburg (DE)
(72) Erfinder: BEGANOVIC, Thomas, 29225 CeIIe (DE); SELLSCHOPP, Jürgen, 38120 Braunschweig (DE); WELZEL, Martin, 38114 Braunschweig (DE)
(86) Internationale Anmeldenummer: PCT/EP2011/000805
(87) Internationale Veröffentlichungsnummer: WO 2011/113514

(56) Entgegenhaltungen:
- EP-A2- 0 899 133
- EP-A2- 1 145 877
- EP-A2- 1 995 087
- DE-A1- 10 346 280
- DE-A1-102004 024 899
- DE-T5-112008 000 406
- DE-U1- 20 319 147
- US-A- 6 138 357
- US-A1- 2004 094 924
- US-A1- 2007 007 741

## Beschreibung

Die Erfindung bezieht sich auf einen Radträger für eine Mehrlenker-Einzelradaufhängung nach dem Oberbegriff von Patentanspruch 1.

Eine derartige Mehrlenker-Einzelradaufhängung umfasst einen oberen Querlenker, einen Längslenker, einen vorderen unteren Querlenker und einen hinteren unteren Querlenker. Die vorgenannten Querlenker sind gelenkig, beispielsweise über elastisch verformbare Buchsen, an den Radträger angebunden.

Aus EP 0 899 133 B1 ist eine Einzelradaufhängung bekannt, die einen oberen und zwei untere Querlenker, sowie einen Längslenker umfasst. Der Längslenker ist an einer zwischen den unteren Querlenkern liegenden hinteren Anbindungsstelle sowie einer vor dem vorderen unteren Querlenker liegenden vorderen Anbindungsstelle mit dem Radträger gekoppelt und dabei von innen her, d.h. an der einer Radfelge abgewandten Innenseite, an den Radträger angesetzt. Zwischen diesen beiden Anbindungsstellen ist der Längslenker relativ breit ausgebildet und in diesem verbreiterten Bereich mit einer Ausnehmung versehen. Der untere vordere Querlenker taucht in diese Ausnehmung ein und ist im Bereich der Ausnehmung mit dem Radträger gekoppelt. Die Koppelung des vorderen unteren Querlenkers mit dem Radträger erfolgt über eine elastische Buchsenstruktur, die derart ausgelegt ist, dass eine durch diese definierte Hauptschwenkachse zumindest grob in Richtung des Längslenkers verläuft.

Einzelradaufhängungen der vorgenannten Bauart finden in großer Breite bei Hinterradaufhängungen von Kraftfahrzeugen Anwendung. Die fahrzeugseitige Anbindung der Querlenker erfolgt dabei in der Regel unter Verwendung eines Hilfsrahmens, der auch als Halterung eines Stabilisators fungieren kann. Die bei einem Kraftfahrzeug entsprechend paarweise vorgesehenen Längslenker können an die Fahrzeugkarosserie über Gelenksysteme angebunden werden. Die Längslenker können im Wesentlichen starr mit dem Radträger gekoppelt, insbesondere mit diesem verschraubt sein. Bei dieser Bauform kann der Radträger in vertikaler Richtung um die karosserieseitige Anbindungsstelle des Längsträgers schwenken. Die Einleitung der seitens der Radfeder- und Dämpfungssysteme generierten Stützkräfte erfolgt hierbei typischerweise über den hinteren, meist vertikal federbelasteten Querlenker. Der Radträger selbst kann als Tiefzieh-, Gesenkschmiede-, oder auch als Gussbauteil gefertigt sein.

Mehrlenker-Einzelradaufhängungen nach dem Oberbegriff von Patentanspruch 1 sind aus EP 1 145 877 A2 und DE 103 46 280 A1 bekannt.

Der Erfindung liegt die Aufgabe zugrunde, einen Radträger für eine Mehrlenker-Einzelradaufhängung zu schaffen, der sich durch eine besonders hohe Strukturfestigkeit auszeichnet.

Diese Aufgabe wird durch einen Radträger für eine Mehrlenker-Einzelradaufhängung gemäß Patentanspruch 1 gelöst. Bei diesem ist insbesondere eine vordere Gelenkbolzenaufnahme der dritten Querlenkeranbindungsstelle über den Längslenkeranbindungsarmabschnitt in den Radträger eingebunden oder, anders ausgedrückt, über den Längslenkeranbindungsarmabschnitt an den Radträger angebunden.

Dadurch wird es auf vorteilhafte Weise möglich, einen Radträger zu schaffen, der sich durch eine besonders belastbare Anbindung des vorderen unteren Querlenkers auszeichnet. In besonders vorteilhafter Weise wird es durch das erfindungsgemäße Konzept zudem möglich, einen in der Gelenkbolzenaufnahme sitzenden Gelenkbolzen beidseitig abzustützen und über den Gelenkbolzen auch eine Aussteifung des zum Längslenkerarm vordringenden Längslenkeranbindungsarmabschnittes zu erreichen. Das erfindungsgemäße Konzept ermöglicht ferner, bisherige Strukturfestigkeiten bei geringerem Materialbedarf und damit geringerem Eigengewicht des Radträgers sowie gegenüber bisherigen Bauweisen reduziertem Durchmesser des Gelenkbolzens zu realisieren.

Durch die hintere Gelenkbolzenaufnahme und die vordere Gelenkbolzenaufnahme wird über den Längslenkeranbindungsarmabschnitt eine Gelenkgabel gebildet, über welche der vordere untere Querlenker zu beiden Seiten seines Lenkerauges gelagert und radial zur Schwenkachse abgestützt ist.

Vorteilhafte Ausgestaltungen der Erfindung sind in weiteren Patentansprüchen angegeben.

Vorzugsweise ist die Gelenkgabel derart gestaltet, dass durch diese die Axialposition des unteren Querlenkers auf seiner Gelenkaugenachse festlegt ist. Im Falle der Ausführung des Radträgers als Guss- oder Schmiedeteil sind die inneren axialen Begrenzungsflächen dieser Gabelstruktur vorzugsweise spanabhebend auf Maß bearbeitet, so dass die zugeordnete Elastomerbuchsenstruktur unter allenfalls für die Montage derselben erforderlichem Fügespiel in dieser Gabelstruktur sitzt.

Die Gelenkgabel kann so gestaltet sein, dass diese einen Gewindeabschnitt zur Aufnahme eines mit einem Gewinde versehenen Gelenkbolzens umfasst. Dieser Gewindeabschnitt ist vorzugsweise in der hinteren Gelenkbolzenaufnahme ausgebildet. Es ist möglich, die Lagerung des vorderen Querlenkers in dieser Gelenkgabel unter Einsatz einer Buchse zu bewerkstelligen, die in enger Axialpassung in der Gelenkgabel sitzt. Über den in die Gelenkgabel eingeschraubten und die Buchse durchsetzenden Gelenkbolzen können die beiden Gelenkbolzenaufnahmen gegeneinander gespannt werden. Hierdurch ergibt sich unter Wirkung des Gelenkbolzens und der diesen umgebenden Buchse auch eine Erhöhung der der Tragfähigkeit des Längslenkarmanbindungsabschnitts.

Der Radträger weist vorzugsweise einen Bremszangenanbindungsabschnitt auf, der als solcher der Anbindung einer Bremszange oder einer anderweitigen Bremsmechanik dient. Der Bremszangenanbindungsabschnitt umfasst vorzugsweise eine Bohrung, die einen zwischen dem Radlageraufnahmeabschnitt und dem Längslenkeranbindungsarmabschnitt liegenden Wurzelbereich desselben durchsetzt. Im Bereich dieser Bohrung ist vorzugsweise auf spanabhebendem Wege eine Sitzfläche ausgebildet, auf welche die Bremszange, ein Bremssattel oder eine anderweitige Komponente der Bremsmechanik aufspannbar ist.

Der Längslenkeranbindungsarmabschnitt ist vorzugsweise so gestaltet, dass dieser einen in Einbauposition im Wesentlichen horizontal oder in seinem Verlauf zur Fahrzeugfront hin leicht nach unten geneigt ausgerichtet verlaufenden Oberarmschenkel und einen hierzu nach unten um beispielsweise 75° abgekröpft verlaufenden Unterarmschenkel aufweist. Die vordere Gelenkbolzenaufnahme umfasst eine spanabhebend bearbeitete Bohrung, die im Bereich ihrer Axialenden von vorzugsweise ebenfalls spanabhebend auf Maß bearbeiteten Ringstirnflächen umsäumt ist. Diese Ringstirnflächen befinden sich auf entsprechend einander gegenüberliegenden Seiten auf einem nasenartigen Vorsprung, der über einen sich in seinem Verlauf zum Unterarmschenkel hin verbreiternden Zwischenabschnitt an jenen Unterarmschenkel angebunden ist.

Der Längslenkeranbindungsarmabschnitt ist vorzugsweise weiterhin derart gestaltet, dass dieser eine erste Verschraubungsstelle und eine zweite Verschraubungsstelle aufweist, wobei die erste Verschraubungsstelle im Übergangsbereich zwischen dem Oberarmschenkel und dem Unterarmschenkel liegt und die zweite Verschraubungsstelle im unteren Endbereich des Unterarmschenkels liegt. Die vorangehend genannte vordere Gelenkbolzenaufnahme befindet sich vorzugsweise in einem zwischen diesen beiden Verschraubungsstellen liegenden und gegenüber diesen zur Fahrzeugaußenseite (oder zum Bremsscheibenraum) hin versetzten Bereich. Der vorangehend genannte, zwischen der vorderen Gelenkbolzenaufnahme und dem Unterarmabschnitt liegende Zwischenabschnitt kann so gestaltet sein, dass dieser durch seinen der ersten Gelenkbolzenaufnahme zugewandten Innenbereich eine randseitig von Flankenabschnitten eingefasste, konkave Schalenstruktur bildet. Diese Flankenabschnitte können so gestaltet sein, dass diese aus dem die vorgenannte Bohrung umsäumenden Bereich der Gelenkbolzenaufnahme jeweils zu dem die vorangehend genannten Verschraubungsstellen tragenden Materialabschnitt hin auslaufen.

Der Radträger ist vorzugsweise als Aluminiumgussteil gefertigt. Der Radträger kann so gestaltet sein, dass die in diesen einzubindende Radlagerung, sowie die anzubindende Bremszange weitere Beiträge zur Gesamtfestigkeit des unter Einschluss des Radträgers geschaffenen Systems liefern. Die Radlagerung kann hierzu eine Flanschstruktur umfassen, die z.B. von außen her auf den Radträger aufschraubbar ist. Die Lage der entsprechend in dem Radträger ausgebildeten Radlagerungsanbindungsbohrungen ist vorzugsweise so gewählt, dass sich diese nahe bei den jeweiligen Querlenkeranbindungsstellen oder zumindest in dem Kraftflussweg zu jenen Querlenkeranbindungsstellen befinden.

Der Radträger kann weiterhin durch Stegstrukturen ausgesteift sein. Diese Stegstrukturen können als einwärts, d.h. zur Querlenkeranordnung hin vorkragende, randnahe Stege ausgeführt sein. Diese Stege können in den Längslenkeranbindungsarmabschnitt auslaufen.

Weitere Einzelheiten und technische Merkmale der Erfindung ergeben sich aus der nachfolgenden Beschreibung in Verbindung mit der Zeichnung. Es zeigt:
- Figur 1: eine perspektivische Darstellung einer bevorzugten Ausführungsform eines erfindungsgemäßen Radträgers mit Blick auf dessen Innenseite, d.h. auf eine, einer zugeordneten Querlenkeranordnung zugewandte Seite;
- Figur 2: eine weitere perspektivische Darstellung des Radträgers nach Figur 1, hier jedoch mit Blick auf dessen Außenseite;
- Figur 3: eine perspektivische Darstellung des Radträgers nach den Figuren 1 und 2, nunmehr mit angesetztem vorderen unteren Querlenker.

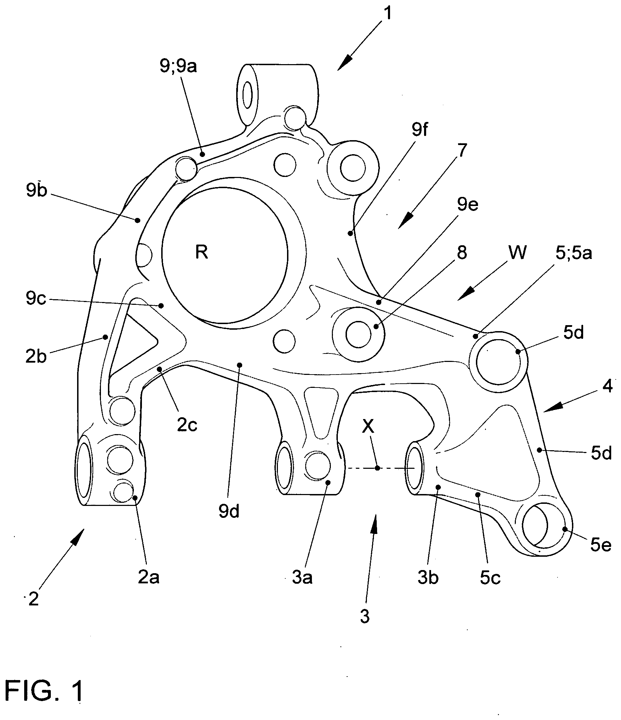

Die Darstellung nach Figur 1 zeigt einen erfindungsgemäßen Radträger für eine Mehrlenker-Einzelradaufhängung. Dieser Radträger umfasst einen Radlagerungsaufnahmeabschnitt R zur Aufnahme einer hier nicht näher dargestellten Radlagerung. Weiterhin umfasst der Radträger eine erste Querlenkeranbindungsstelle 1 zur Anbindung eines oberen Querlenkers, eine zweite Querlenkeranbindungsstelle 2 zur Anbindung eines hinteren unteren Querlenkers, eine dritte Querlenkeranbindungsstelle 3 zur Anbindung eines vorderen unteren Querlenkers, sowie eine Längslenkeranbindungsstelle 4 zur Anbindung eines Längslenkerarmes. Die Längslenkeranbindungsstelle 4 ist durch einen Längslenkeranbindungsarmabschnitt 5 gebildet, der aus einem in Einbaustellung des Radträgers über der dritten Querlenkeranbindungsstelle 3 liegenden Bereich zum zugeordneten Längslenkerarm (nicht dargestellt) vordringt.

Der erfindungsgemäße Radträger zeichnet sich dadurch aus, dass die dritte Querlenkeranbindungsstelle 3 durch eine hintere Gelenkbolzenaufnahme 3a und eine vordere Gelenkbolzenaufnahme 3b gebildet ist, und dass die vordere Gelenkbolzenaufnahme 3b als Bestandteil des Längslenkeranbindungsarmabschnitts 5 ausgeführt ist und damit über den Längslenkerarmanbindungsabschnitt 5 in den Radträger eingebunden ist.

Durch die hintere Gelenkbolzenaufnahme 3a und die am Längslenkeranbindungsarmabschnitt 5 ausgebildete vordere Gelenkbolzenaufnahme 3b wird eine Gelenkgabel gebildet, die einen den Querlenker lagernden Gelenkbolzen beidseitig abstützt und zugleich die Axialposition des vorderen unteren Querlenkers auf seiner Hauptschwenkachse X festlegt.

Die Gelenkgabel ist hier derart gestaltet, dass diese einen Gewindeabschnitt umfasst, um einen mit einem Gewinde versehenen Gelenkbolzen aufzunehmen. Der Gewindeabschnitt ist hier in der hinteren Gelenkbolzenaufnahme 3a ausgebildet.

Der Radträger weist einen Bremszangenanbindungsabschnitt 7 auf, über den eine Bremszange angebunden ist. Der Bremszangenanbindungsabschnitt 7 umfasst eine untere Bohrung 8, die einen zwischen dem Radlagerungsaufnahmeabschnitt R und dem Längslenkeranbindungsarmabschnitt 5 liegenden Wurzelbereich W desselben durchsetzt.

Der Längslenkeranbindungsarmabschnitt 5 ist so gestaltet, dass dieser einen in Einbauposition im Wesentlichen horizontal ausgerichtet verlaufenden Oberarmschenkel 5a und einen hierzu nach unten abgekröpft verlaufenden Unterarmschenkel 5b aufweist.

Die vordere Gelenkbolzenaufnahme 3b ist durch eine, wie hier erkennbar innenseitig konkave, Nasenstruktur 5c getragen, die von dem vorgenannten Unterarmschenkel 5b nach außen, also zum Radbereich hin ragt.

Der Längslenkeranbindungsarmabschnitt 5 weist eine erste Verschraubungsstelle 5d und eine zweite Verschraubungsstelle 5e auf, wobei die erste Verschraubungsstelle 5d im Übergangsbereich zwischen dem Oberarmschenkel 5a und dem Unterarmschenkel 5b liegt. Die zweite Verschraubungsstelle 5e liegt im unteren Endbereich des Unterarmschenkels 5b. Der Radträger ist bei diesem Ausführungsbeispiel als Aluminiumgussteil gefertigt.

Die zweite Querlenkeranbindungsstelle 2 ist durch einen Buchsenabschnitt 2a gebildet, der über eine sich zum Radlagerungsaufnahmeabschnitt R verbreiternd auslaufende Fachwerksstruktur mit einem ersten Steg 2b und einem zweiten Steg 2c an jenen Materialabschnitt des Radträgers angebunden ist, der den Radlagerungsbereich R umsäumt. Jener den Radlagerungsbereich umsäumende Materialabschnitt ist randseitig von einem Steg 9 eingefasst, der mehrere Stegabschnitte 9a, 9b, 9c, 9d, 9e, 9f aufweist. Diese Stegabschnitte 9a, 9b, 9c, 9d, 9e, 9f bewirken eine Aussteifung des Radträgers und zudem eine besonders starre Anbindung der Querlenkeranbindungsstellen 1, 2, 3 sowie des Längslenkeranbindungsarmabschnitts 5.

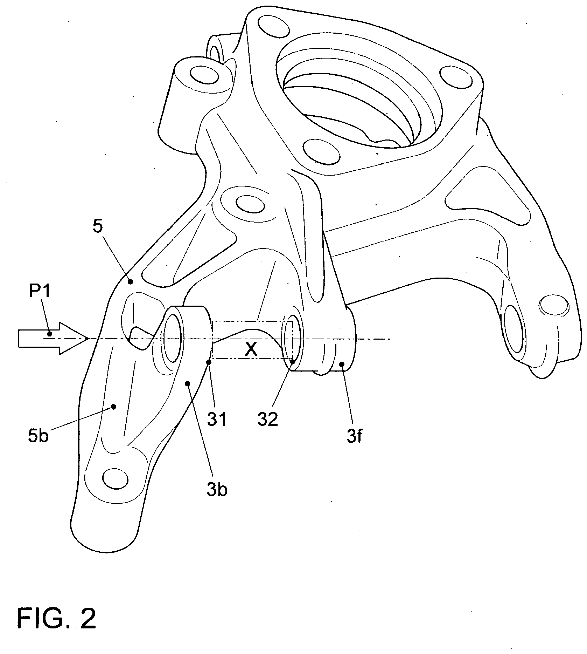

In Figur 2 ist der Aufbau des erfindungsgemäßen Radträgers weiter veranschaulicht. Aus dieser Darstellung ist die im Wege der erfindungsgemäßen Gestaltung des Längslenkeranbindungsarmabschnitts 5 mit integrierter zusätzlicher Gelenkbolzenaufnahme 3b realisierte Gabelstruktur ersichtlich. Diese Gabelstruktur bildet zwei Anlageflächen 31, 32, zwischen welchen der vordere untere Querlenker bzw. dessen unter Einschluss einer Elastomerbuchse gebildete Lagerung axial gesichert aufgenommen wird. Der Einschub eines entsprechenden Gewindebolzens erfolgt aus Richtung P1. Der Gewindebolzen wird in ein vorzugsweise unmittelbar in die hintere Gelenkbolzenaufnahme 3a eingeschnittenes Gewinde eingeschraubt. Durch den Gewindebolzen wird der Unterarmschenkel 5b relativ steif mit der hinteren Gelenkbolzenaufnahme 3a gekoppelt.

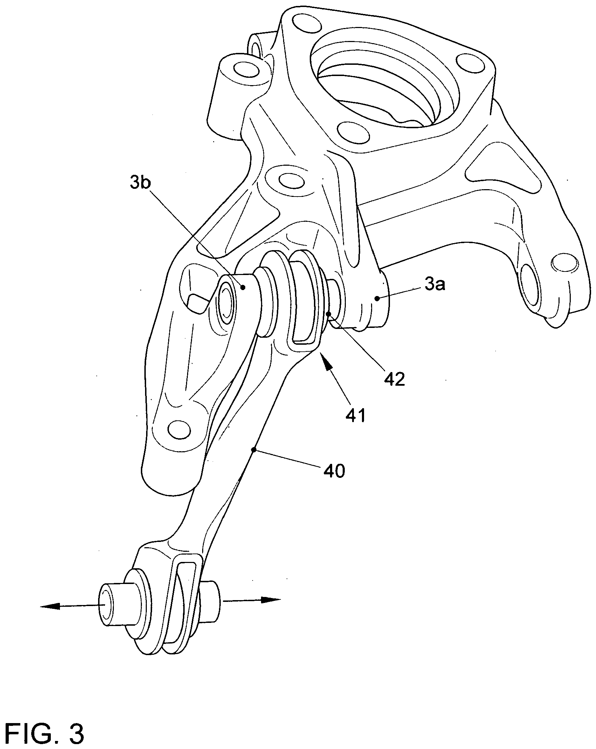

In Figur 3 ist der erfindungsgemäße Radträger nebst zugeordnetem Querlenker 40 (vorderer unterer Querlenker, auch als Spurstange bezeichnet) dargestellt. Der Querlenker 40 ist als Blechumformteil ausgeführt. In dem dem Radträger zugeordneten Lenkerauge 41 des Querlenkers 40 sitzt eine erste Außenbuchse 42, die durch Presssitz, Schweißverbindung oder anderweitige Strukturen in dem Lenkerauge 41 gesichert ist. In dieser Außenbuchse 42 sitzt eine Elastomerbuchse. In dieser Elastomerbuchse sitzt eine Stützbuchse. Diese Stützbuchse wird von dem Gelenkbolzen durchsetzt, der als solcher beidseitig in den beiden Gelenkbolzenaufnahmen 3a, 3b sitzt.

Durch das erfindungsgemäße Konzept wird es möglich, bei einem Radträger eine doppelschnittige Anbindung des vorderen, auch als Spurstange bezeichneten Querlenkers zu realisieren. Die Erfindung eignet sich insbesondere für un- oder nur eingeschränkt gelenkte Hinterachssysteme. Die Erfindung kann sowohl bei angetriebenen, als auch bei nicht angetriebenen Achssystemen Anwendung finden.

Durch das erfindungsgemäße Konzept ergibt sich ein verbesserter Leichtbau bei gleichzeitig erhöhter Festigkeit und Steifigkeit der Bauteilstruktur. Der erfindungsgemäße Radträger kann als Al-Gussbauteil, vorzugsweise im CPC-Verfahren (Kokillen-Gegendruck-Verfahren) gefertigt werden. Der erfindungsgemäße Radträger kann auch aus anderen Gießwerkstoffen und durch anderweitige Fertigungsverfahren gefertigt werden. Durch das erfindungsgemäße Konzept ist eine erhebliche Erhöhung der Strukturfestigkeit erreichbar. Bei außerordentlichen Belastungen (z.B. Schlaglochüberquerung) schafft das erfindungsgemäße Konzept aufgrund der signifikanten Erhöhung der Steifigkeit große Sicherheitsreserven. Das erfindungsgemäße Konzept bietet weiterhin ein beachtliches Materialeinsparpotential durch breitgefächertes Ableiten eingebrachter Kräfte und signifikante Reduzierung der Biegemomente.

Die Grundkonstruktion erfolgt vorzugsweise als Aluminium- oder Eisengussteil. Die Spurstangenanbindung der vorderen unteren Spurstange erfolgt doppelschnittig. Die bauartgegeben vorhandene Längslenkeranbindung übernimmt eine zusätzliche Stützfunktion und bewirkt eine Lastaufteilung.

Durch das erfindungsgemäße Konzept kann auf bislang erforderliche Unterlegscheiben und Muttern verzichtet werden und der zur Anbindung der Spurstange vorgesehene Gelenkbolzen kann über eine Direktverschraubung direkt ins Vollmaterial des Radträgers eingeschraubt werden.

Die über den vorderen unteren Querlenker eingeleiteten Kräfte werden von dem Längslenkerarmanbindungsabschnitt 5 und einem hinteren Gelenkbolzenanbindungsabschnitt aufgefangen und breitgefächert abgeleitet. Durch das erfindungsgemäße Konzept ergeben sich eine Reduzierung der ungefederten Masse sowie eine Verminderung des Gesamtfahrzeuggewichts und damit ein positiver Beitrag zur Senkung des Kraftstoffverbrauchs. Weiterhin wird durch das erfindungsgemäße Konzept eine Reduzierung der Vorspannkräfte in der Spurstangenverschraubung möglich. Hierdurch wird es möglich, die geforderte Festigkeit mit kleineren Größen direkt ins Vollmaterial des Radträgers eingeschraubter Schrauben zu erreichen.

Der erfindungsgemäße Radträger kann gegenüber bisherigen Bauformen kostengünstiger und unter geringerem Werkstoffeinsatz sowie unter Entfall zahlreicher Norm- und Wiederholteile geund verbaut werden.

Durch die erfindungsgemäß erreichte Doppelschnittigkeit der Spurstangenanbindung kann die Spurstange in den Lastabtrag mit einbezogen werden. Das unter Einbeziehung der Spurstange (bzw. deren Lager) entstehende Tragwerk bildet einen neuen Lastpfad, über den sowohl Kräfte von Längslenker als auch Spurstange geleitet werden. Dies hat zur Folge, dass durch die so erzielte Herausbildung eines Tragwerks ein Lastsplitting erreicht wird. Momente über Zug/Druck können deutlich effizienter abgetragen werden. Die Torsionsbelastung der Spurstangenanbindung kann verhindert werden.

Die erfindungsgemäße Bauweise hat damit ein signifikant erhöhtes Leichtbaupotenzial. Der Materialeinsatz kann bei gleichbleibender Festigkeit deutlich reduziert werden, da das unter Miteinbeziehung der Spurstange neu geschaffene Tragwerk Biegemomente deutlich materialeffizienter abtragen kann.

## Patentansprüche

1. Radträger für eine Mehrlenker-Einzelradaufhängung, umfassend:
- einen Radlagerungsaufnahmeabschnitt (R) zur Aufnahme einer Radlagerung;
- eine erste Querlenkeranbindungsstelle (1) zur Anbindung eines oberen Querlenkers;
- eine zweite Querlenkeranbindungsstelle (2) zur Anbindung eines hinteren unteren Querlenkers;
- eine dritte Querlenkeranbindungsstelle (3) mit Gelenkbolzenaufnahme zur Anbindung eines vorderen unteren Querlenkers (40); und
- eine Längslenkeranbindungsstelle (4) zur Anbindung eines Längslenkerarmes, wobei die Längslenkeranbindungsstelle (4) an einem Längslenkeranbindungsarmabschnitt (5) gebildet wird, der aus einem in Einbaustellung des Radträgers über der dritten Querlenkeranbindungsstelle (3) liegenden Bereich zum zugeordneten Längslenkerarm vordringt,
**dadurch gekennzeichnet, dass**
- die dritte Querlenkeranbindungsstelle (3) mit Gelenkbolzenaufnahme durch eine hintere Gelenkbolzenaufnahme (3a) und eine vordere Gelenkbolzenaufnahme (3b) gebildet ist,
- die vordere Gelenkbolzenaufnahme (3b) über den Längslenkeranbindungsarmabschnitt (5) in den Radträger eingebunden ist, und
- durch die hintere Gelenkbolzenaufnahme (3a) und die vordere Gelenkbolzenaufnahme (3b) unter Einschluss des Längslenkeranbindungsarmabschnitts (5) eine Gelenkgabel gebildet ist, über welche ein den vorderen unteren Querlenker (40) lagernder Gelenkbolzen beidseitig in den beiden Gelenkbolzenaufnahmen (3a, 3b) radial abgestützt ist.

2. Radträger nach Anspruch 1, **dadurch gekennzeichnet, dass** die Gelenkgabel derart gestaltet ist, dass durch diese im Zusammenspiel mit einer Gelenkbuchse die Axialposition des unteren Querlenkers (40) auf seiner Hauptschwenkachse (X) festgelegt ist.

3. Radträger nach Anspruch 1 oder 2 **dadurch gekennzeichnet, dass** die Gelenkgabel einen Gewindeabschnitt zur Aufnahme eines mit einem Gewinde versehenen Gelenkbolzens umfasst.

4. Radträger nach Anspruch 3, **dadurch gekennzeichnet, dass** der Gewindeabschnitt in der hinteren Gelenkbolzenaufnahme (3a) ausgebildet ist.

5. Radträger nach einem der Ansprüche 1 bis 4, **dadurch gekennzeichnet, dass** der Radträger einen Bremszangenanbindungsabschnitt (7) zur Anbindung einer Bremszange aufweist, wobei der Bremszangenanbindungsabschnitt (7) eine Bohrung (8) umfasst, die einen zwischen dem Radlagerungsaufnahmeabschnitt (R) und dem Längslenkeranbindungsarmabschnitt (5) liegenden Wurzelbereich (W) desselben durchsetzt.

6. Radträger nach einem der Ansprüche 1 bis 5, **dadurch gekennzeichnet, dass** der Längslenkeranbindungsarmabschnitt (5) einen in Einbauposition im Wesentlichen horizontal ausgerichtet verlaufenden Oberarmschenkel (5a) und einen hierzu nach unten abgekröpft verlaufenden Unterarmschenkel (5b) aufweist.

7. Radträger nach Anspruch 6, **dadurch gekennzeichnet, dass** die vordere Gelenkbolzenaufnahme (3b) durch eine Nasenstruktur gebildet ist die von dem vorgenannten Unterarmschenkel (5b) nach außen abragt.

8. Radträger nachAnspruch 6 oder 7, **dadurch gekennzeichnet, dass** der Längslenkeranbindungsarmabschnitt (5) eine erste Verschraubungsstelle (5d) und eine zweite Verschraubungsstelle (5e) aufweist, wobei die erste Verschraubungsstelle (5d) im Übergangsbereich zwischen dem Oberarmschenkel (5a) und dem Unterarmschenkel (5b) liegt, und die zweite Verschraubungsstelle (5e) im unteren Endbereich des Unterarmschenkels (5b) liegt.

9. Mehrlenker-Einzelradaufhängung mit einem Radträger nach einem der vorgenannten Ansprüche.

## Claims

1. Wheel support for an independent multilink suspension system, comprising:
- a wheel bearing receiving portion (R) for receiving a wheel bearing;
- a first transverse link connecting point (1) for the connection of an upper transverse link;
- a second transverse link connecting point (2) for the connection of a rear lower transverse link;
- a third transverse link connecting point (3) with a hinge pin receptacle for the connection of a front lower transverse link (40); and
- a longitudinal link connecting point (4) for the connection of a longitudinal link arm, wherein the longitudinal link connecting point (4) is formed on a longitudinal link connecting arm portion (5) which leads from a region lying above the third transverse link connecting point (3), in the fitted position of the wheel support, to the associated longitudinal link arm,
**characterized in that**
- the third transverse link connecting point (3) with a hinge pin receptacle is formed by a rear hinge pin receptacle (3a) and a front hinge pin receptacle (3b),
- the front hinge pin receptacle (3b) is connected into the wheel support via the longitudinal link connecting arm portion (5), and
- the rear hinge pin receptacle (3a) and the front hinge pin receptacle (3b), including the longitudinal link connecting arm portion (5), form a hinge yoke via which a hinge pin supporting the front lower transverse link (40) is radially supported on both sides in the two hinge pin receptacles (3a, 3b).

2. Wheel support according to Claim 1, **characterized in that** the hinge yoke is configured in such a manner that the latter in cooperation with a hinge bush defines the axial position of the lower transverse link (40) on its main pivot axis (X).

3. Wheel support according to Claim 1 or 2, **characterized in that** the hinge yoke comprises a threaded portion for receiving a hinge pin provided with a thread.

4. Wheel support according to Claim 3, **characterized in that** the threaded portion is formed in the rear hinge pin receptacle (3a).

5. Wheel support according to one of Claims 1 to 4, **characterized in that** the wheel support has a brake calliper connecting portion (7) for the connection of a brake calliper, wherein the brake calliper connecting portion (7) comprises a bore (8) which penetrates a root region (W) of the longitudinal link connecting arm portion (5), said root region lying between the wheel bearing receiving portion (R) and said longitudinal link connecting arm portion (5).

6. Wheel support according to one of Claims 1 to 5, **characterized in that** the longitudinal link connecting arm portion (5) has an upper arm limb (5a) running in a substantially horizontally oriented manner in the fitted position, and a lower arm limb (5b) running in a manner bent downwards with respect to the upper arm limb.

7. Wheel support according to Claim 6, **characterized in that** the front hinge pin receptacle (3b) is formed by a lug structure which protrudes outwards from the aforementioned lower arm limb (5b).

8. Wheel support according to Claim 6 or 7, **characterized in that** the longitudinal link connecting arm portion (5) has a first screwing point (5d) and a second screwing point (5e), wherein the first screwing point (5d) lies in the transition region between the upper arm limb (5a) and the lower arm limb (5b), and the second screwing point (5e) lies in the lower end region of the lower arm limb (5b).

9. Independent multilink suspension system with a wheel support according to one of the preceding claims.

## Revendications

1. Support de roue pour une suspension indépendante à plusieurs bras, comprenant :
- une portion de réception de palier de roue (R) pour recevoir un palier de roue ;
- un premier point de liaison de bras oscillant transversal (1) pour la liaison d'un bras oscillant transversal supérieur ;
- un deuxième point de liaison de bras oscillant transversal (2) pour la liaison d'un bras oscillant transversal inférieur arrière ;
- un troisième point de liaison de bras oscillant transversal (3) avec un logement de boulon d'articulation pour la liaison d'un bras oscillant transversal avant inférieur (40) ; et
- un point de liaison de bras oscillant longitudinal (4) pour la liaison d'un bras oscillant longitudinal, le point de liaison de bras oscillant longitudinal (4) étant formé au niveau d'une portion de bras de liaison de bras oscillant longitudinal (5) qui s'avance depuis une région située dans la position d'installation du support de roue au-delà du troisième point de liaison du bras oscillant transversal (3) jusqu'au bras oscillant longitudinal associé,
**caractérisé en ce que**
- le troisième point de liaison de bras oscillant transversal (3) est formé avec un logement de boulon d'articulation par un logement de boulon d'articulation arrière (3a) et un logement de boulon d'articulation avant (3b),
- le logement de boulon d'articulation avant (3b) est incorporé dans le support de roue par le biais de la portion de bras de liaison de bras oscillant longitudinal (5), et
- une fourche d'articulation est formée par le logement de boulon d'articulation arrière (3a) et le logement de boulon d'articulation avant (3b) en formant la portion de bras de liaison de bras oscillant longitudinal (5), par le biais de laquelle fourche d'articulation un boulon d'articulation supportant le bras oscillant transversal inférieur avant (40) est supporté radialement des deux côtés dans les deux logements de boulon d'articulation (3a, 3b).

2. Support de roue selon la revendication 1, **caractérisé en ce que** la fourche d'articulation est configurée de telle sorte que la position axiale du bras oscillant transversal inférieur (40) sur son axe de pivotement principal (X) soit fixée par ladite fourche d'articulation en collaboration avec une douille d'articulation.

3. Support de roue selon la revendication 1 ou 2, **caractérisé en ce que** la fourche d'articulation comprend une portion filetée pour recevoir un boulon d'articulation pourvu d'un filetage.

4. Support de roue selon la revendication 3, **caractérisé en ce que** la portion filetée est réalisée dans le logement de boulon d'articulation arrière (3a).

5. Support de roue selon l'une quelconque des revendications 1 à 4, **caractérisé en ce que** le support de roue présente une portion de liaison d'étrier de frein (7) pour la liaison d'un étrier de frein, la portion de liaison d'étrier de frein (7) présentant un alésage (8) qui traverse une région d'embase (W) de celle-ci, située entre la portion de réception de palier de roue (R) et la portion de bras de liaison de bras oscillant longitudinal (5).

6. Support de roue selon l'une quelconque des revendications 1 à 5, **caractérisé en ce que** la portion de bras de liaison de bras oscillant longitudinal (5) présente une branche de bras supérieure (5a) s'étendant dans la position d'installation de manière orientée essentiellement horizontalement et une branche de bras inférieure (5b) s'étendant de manière coudée vers le bas par rapport à celle-ci.

7. Support de roue selon la revendication 6, **caractérisé en ce que** le logement de boulon d'articulation avant (3b) est formé par une structure de nez qui fait saillie vers l'extérieur depuis ladite branche de bras inférieure (5b).

8. Support de roue selon la revendication 6 ou 7, **caractérisé en ce que** la portion de bras de liaison de bras oscillant longitudinal (5) présente un premier point de vissage (5d) et un deuxième point de vissage (5e), le premier point de vissage (5d) étant situé dans la région de transition entre la branche de bras supérieure (5a) et la branche de bras inférieure (5b), et le deuxième point de vissage (5e) étant situé dans la région d'extrémité inférieure de la branche de bras inférieure (5b).

9. Suspension indépendante à plusieurs bras comprenant un support de roue selon l'une quelconque des revendications précédentes.
